# EUROPEAN PATENT APPLICATION

(11) **EP 3 878 717 A1**
(43) Date of publication of application: **15.09.2021**
(21) Application number: 21160160.4
(22) Date of filing: 02.03.2021
(51) Int. Cl.: B62D 15/02, B60W 30/06, G08G 1/16, H04L 29/08

(54) **AUTOMATED PARKING DEVICE AND METHOD**

(30) Priority: 09.03.2020 US 202016812753
(71) Applicant: Aptiv Technologies Limited, St. Michael (BB)
(72) Inventor: Mujumdar, Tapan, Kokomo, IN Indiana 46902 (US); Greene, Jeremy S., Indianapolis, IN Indiana 46236 (US)
(74) Representative: Manitz Finsterwald Patent- und Rechtsanwaltspartnerschaft mbB

(57) **Abstract**

A device includes a parking spacing module configured to identify at least one user-specific parameter associated with one or more passengers of a vehicle. The spacing module also configured to determine a peripheral spacing parameter for parking the vehicle based on the identified at least one user-specific parameter. The device also includes an automated parking module configured to control parking of the vehicle based on the determined peripheral spacing parameter.

## Description

### CROSS-REFERENCE TO RELATED APPLICATIONS

This application claims the benefit of U.S. Patent Application No. 16/812,753 filed March 9, 2020, the disclosures of which are hereby incorporated by reference in their entirety herein.

### TECHNICAL FIELD OF DISCLOSURE

This disclosure generally relates to a device for automated vehicle parking.

### BACKGROUND OF THE DISCLOSURE

Typical automated vehicle parking systems have factory programmed thresholds that may not match a user's preferences or accessibility needs.

### SUMMARY OF THE DISCLOSURE

An example of an automated parking device includes a parking spacing module configured to identify at least one user-specific parameter associated with one or more passengers of a vehicle. The device is also configured to determine a peripheral spacing parameter for parking the vehicle based on the identified at least one user-specific parameter. The device also includes an automated parking module configured to control parking of the vehicle based on the determined peripheral spacing parameter.

In an example having one or more features of the automated parking device of the previous paragraph, identifying the at least one user-specific parameter comprises utilizing one or more sensor systems of the vehicle to automatically identify at least one size dimension associated with the one or more passengers of the vehicle.

In an example having one or more features of the automated parking device of any of the previous paragraphs, the one or more sensor systems includes at least one of a camera, a ranging sensor, a seat pressure sensor, a seat position sensor, and a radio frequency receiver.

In an example having one or more features of the automated parking device of any of the previous paragraphs, the at least one size dimension includes one or more of a height, a width, and a weight of the one or more passengers.

In an example having one or more features of the automated parking device of any of the previous paragraphs, identifying the at least one user-specific parameter comprises utilizing one or more sensor systems of the vehicle to automatically identify at least one disability associated with the one or more passengers of the vehicle.

In an example having one or more features of the automated parking device of any of the previous paragraphs, the at least one disability includes one or more of a visual disability, and a locomotor disability.

In an example having one or more features of the automated parking device of any of the previous paragraphs, identifying the at least one user-specific parameter comprises receiving input from at least one user indicating a spacing preference.

In an example having one or more features of the automated parking device of any of the previous paragraphs, the input is received via a graphical user interface (GUI) configured to accept the input from the one or more passengers of the vehicle.

In an example having one or more features of the automated parking device of any of the previous paragraphs, the GUI includes a display indicating a preferred spacing around a perimeter of the vehicle.

In an example having one or more features of the automated parking device of any of the previous paragraphs, one or more user profiles indicative of the at least one user-specific parameter are stored in a memory of the device.

In an example having one or more features of the automated parking device of any of the previous paragraphs, the automated parking module adjusts proximity warnings based on the determined peripheral spacing parameter.

In an example having one or more features of the automated parking device of any of the previous paragraphs, the peripheral spacing parameter is individually adjustable for each side of the vehicle.

An example of a method of operating an automated parking device includes, identifying at least one user-specific parameter associated with one or more passengers of a vehicle with a parking spacing module; determining, with the parking spacing module, a peripheral spacing parameter for parking the vehicle based on the identified at least one user-specific parameter; and controlling the parking of the vehicle based on the determined peripheral spacing parameter with an automated parking module.

In an example having one or more features of the method of operating the automated parking device of the previous paragraph, identifying the at least one user-specific parameter comprises utilizing one or more sensor systems of the vehicle to automatically identify at least one size dimension associated with the one or more passengers of the vehicle.

In an example having one or more features of the method of operating the automated parking device of any of the previous paragraphs, the one or more sensor systems includes at least one of a camera, a ranging sensor, a seat pressure sensor, a seat position sensor, and a radio frequency receiver.

In an example having one or more features of the method of operating the automated parking device of any of the previous paragraphs, the at least one size dimension includes one or more of a height, a width, and a weight of the one or more passengers.

In an example having one or more features of the method of operating the automated parking device of any of the previous paragraphs, identifying the at least one user-specific parameter comprises utilizing one or more sensor systems of the vehicle to automatically identify at least one disability associated with the one or more passengers of the vehicle.

In an example having one or more features of the method of operating the automated parking device of any of the previous paragraphs, the at least one disability includes one or more of a visual disability, and a locomotor disability.

In an example having one or more features of the method of operating the automated parking device of any of the previous paragraphs, identifying the at least one user-specific parameter comprises receiving input from at least one user indicating a spacing preference.

In an example having one or more features of the method of operating the automated parking device of any of the previous paragraphs, input is received via a graphical user interface (GUI) configured to accept input from the one or more passengers of the vehicle.

In an example having one or more features of the method of operating the automated parking device of any of the previous paragraphs, the GUI includes a display indicating a preferred spacing around a perimeter of the vehicle.

In an example having one or more features of the method of operating the automated parking device of any of the previous paragraphs, one or more user profiles indicative of the at least one user-specific parameter are stored in a memory of the device.

In an example having one or more features of the method of operating the automated parking device of any of the previous paragraphs, the automated parking module adjusts proximity warnings based on the determined peripheral spacing parameter.

In an example having one or more features of the method of operating the automated parking device of any of the previous paragraphs, the peripheral spacing parameter is individually adjustable for each side of the vehicle.

### BRIEF DESCRIPTION OF DRAWINGS

The present invention will now be described, by way of example with reference to the accompanying drawings, in which:
Fig. 1 is an illustration of an automated parking device in accordance with one example;
Fig. 2 is an illustration of a peripheral spacing parameter in accordance with one example;
Fig. 3 is an illustration of another peripheral spacing parameter in accordance with one example;
Fig. 4 is an illustration of a graphical user interface of the device of Fig. 1 in accordance with one example;
Fig. 5 is an illustration a logic flow of the device of Fig. 1 in accordance with one example;
Fig. 6 is a flow chart of a method of operating the device of Fig. 1 in accordance with one example;

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

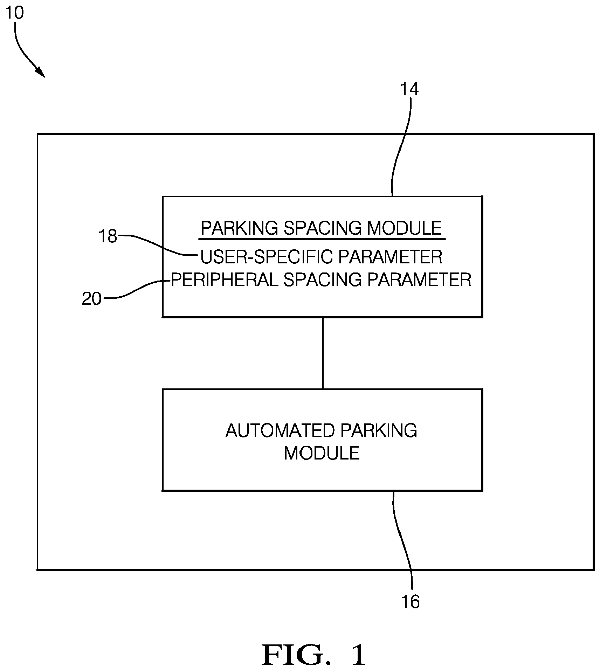

An example of an automated parking device 10 is shown in Fig. 1 and includes a parking spacing module 14 and an automated parking module 16. The parking spacing module 14 may automatically determine a user's preference for a spacing around a perimeter of a parked vehicle, and/or may receive the user's preference via in input device, such as a graphical user interface (GUI) or other input. The automated parking module 16 then controls the parking of the vehicle based on the user's spacing preferences.

The automated parking device 10, hereafter the device 10, may be installed in a host vehicle 12 to perform automated parking maneuvers. The device 10 may be included in a controller circuit (not shown) of the host vehicle 12 and share a memory and/or other components with the controller circuit, or may be a stand-alone device 10. The device 10 may include a processor (not shown) such as a microprocessor or other control circuitry such as analog and/or digital control circuitry. The control circuitry may include one or more application-specific integrated circuits (ASICs) or field programmable gate arrays (FPGAs) that are programmed to perform the techniques, or may include one or more general purpose hardware processors programmed to perform the techniques pursuant to program instructions in firmware, memory, other storage, or a combination. The device 10 may also combine custom hard-wired logic, ASICs, or FPGAs with custom programming to accomplish the techniques. The device 10 may include a memory or storage media (not shown), including non-volatile memory, such as electrically erasable programmable read-only memory (EEPROM) for storing one or more routines, thresholds, and captured data. The EEPROM stores data and allows individual bytes to be erased and reprogrammed by applying special programming signals. The device 10 may include other examples of non-volatile memory, such as flash memory, read-only memory (ROM), programmable read-only memory (PROM), and erasable programmable read-only memory (EPROM). The device 10 may include volatile memory, such as dynamic random-access memory (DRAM), static random-access memory (SRAM). The one or more routines may be executed by the processor to perform steps for determining a parking spot for the host vehicle 12, based on signals received by the device 10 from sensors associated with the host vehicle 12 as described herein.

The host vehicle 12 may be characterized as an automated vehicle. As used herein, the term automated vehicle may apply to instances when the host vehicle 12 is being operated in an automated driving mode, i.e. a fully autonomous driving mode, where the operator of the host vehicle 12 may do little more than designate a destination to operate the host vehicle 12. The host vehicle 12 may also be operated in a manual driving mode where the degree or level of automation may be little more than providing an audible or visual warning to the human operator who is generally in control of the steering, accelerator, and brakes of the host vehicle 12. For example, the system may merely assist the operator as needed to change lanes and/or avoid interference with and/or a collision with, an object such as another vehicle, a pedestrian, or a road sign. The manual driving mode may include semi-automated driver assistance features, such as lane keeping, cruise control, collision avoidance, and parking assistance.

The parking spacing module 14 is configured to identify at least one user-specific parameter 18 associated with one or more passengers of the host vehicle 12. In some examples, the device 10 uses one or more sensor systems of the host vehicle 12 to automatically identify the at least one user-specific parameter 18. In other examples, a user inputs the at least one user-specific parameter 18.

In an example, the one or more sensor systems include one or more of a camera, a radar sensor, a LiDAR sensor, a radio frequency receiver that may be a component of a passive entry/passive start system (PEPS), and an occupant detection system. In an example, the at least one user-specific parameter 18 is at least one size dimension associated with the one or more passengers of the host vehicle 12. In this example, the at least one size dimension includes one or more of a height, a width, a circumference, and a weight of the one or more passengers. In another example, the weight of the passengers is determined by the occupant detection system that may include a pressure transducer in the seats of the host vehicle 12.

In another example, the height of the one or more passengers is determined by the camera that is located inside the host vehicle 12 and is configured to monitor the driver and/or other passengers. In this example, the camera may determine the height of the one or more passengers based on positions of features (e.g., eyes, top of head) of the passengers relative to the known position of the camera in a vehicle coordinate system. In another example, the camera may be positioned with a field of view external to the host vehicle 12 (e.g., forward and/or rear and/or side facing cameras) and may determine the height and width of the passengers based on features of the passengers when the passengers are external to the host vehicle 12. In an example, the radar and/or LiDAR sensors may determine the height and width of the passengers external to the host vehicle 12 based on detection data associated with each of the passengers. In another example, the radar and/or LiDAR sensors may be part of an occupant monitoring system inside the host vehicle 12, and may determine the height and width of the passengers inside the host vehicle 12 based on detection data associated with each of the passengers.

In another example, the height of the passengers is determined by the radio frequency receiver based on a vertical height above a ground surface of a portable wireless device (e.g., a key fob, a mobile phone, etc.) carried by the user (e.g., carried at or near the waist or hip of the user). A disclosure of this method is found in U.S. Patent Application Number 16/680,617, titled, SYSTEM AND METHOD FOR ADJUSTING VEHICLE SETTINGS BASED ON HEIGHT OF PORTABLE WIRELESS DEVICE, filed November 12, 2019, and is incorporated herein by reference in in its entirety. In this example, a portable wireless device (e.g., a key fob, mobile phone, etc.) is configured to communicate with the host vehicle 12 using a wireless signal. The host vehicle 12 includes multiple nodes, such as base stations, positioned about or within the host vehicle 12. Each node is configured to receive a wireless signal and to generate a signal indicative of a position of the portable wireless device. Together the nodes and the controller are configured to determine a three-dimensional location of the portable wireless device based on the signal generated by each node. In one example, the controller, nodes, and the portable wireless device engage in a series of signal exchanges with one another and utilize a time of flight (TOF) implementation to determine a distance of the portable wireless device from the host vehicle 12. Thereafter, the nodes and controller employ trilateration to locate the portable wireless device. The use of trilateration enables the controller to evaluate horizontal position of the portable wireless device relative to the host vehicle 12 using distance measurements. In some examples, a known vertical offset between a fourth node and the other nodes enables the host vehicle 12 to calculate a three-dimensional (3-D) location of the portable wireless device relative to multiple planes, using trilateration. Such 3-D analysis provides for a more accurate location determination, compared to a 2-D analysis relative to a single plane. In some examples, the controller may determine that the portable wireless device is positioned at a distance of 4.5 feet away from the host vehicle 12 and that the portable wireless device is positioned a distance of 3.2 feet from the ground surface. An evaluation of the portable wireless device height may include a comparison to a general population waist height data. In an example, once it is established that the portable wireless device height correlates to a likely user waist/hip height, the overall height of the one or more passengers may be determined by applying a multiplication factor based on known human anthropometric data of body segment lengths.

In another example, parking spacing module 14 identifies the at least one user-specific parameter 18 is at least one disability associated with the one or more passengers of the host vehicle 12. That is, the parking spacing module 14 identifies a user-specific parameter 18 that is an indication that the user has one or more disabilities. In this example, the at least one disability includes one or more of a visual disability, and a locomotor disability. In an example, the visual disability includes partial and/or complete blindness. In an example, the locomotor disability includes restricted use of one or more limbs that may be caused by an illness and/or injury. In an example, the parking spacing module 14 determines the at least one disability based on images captured by the camera, and compares the captured images to a library of images stored in the memory of the device 10. The library of images may include still images and/or video images that indicate particular disabilities, such as images of persons using wheel chairs, walkers, crutches, canes (e.g., walking canes, "white" canes indicative of blindness), service animals, personal human assistants, splints applied to various limbs, limbs supported by slings, etc. The library of images may include motion data indicative of particular disabilities that affect a locomotion of a person, or indicate a lack of motor control of the limbs. In this example, the motion data may represent jerky, irregular, erratic, and spasmodic motions that may indicate the locomotor disability. In an example, the device 10 may employ various methods of machine learning to improve the determination and/or recognition of the disability.

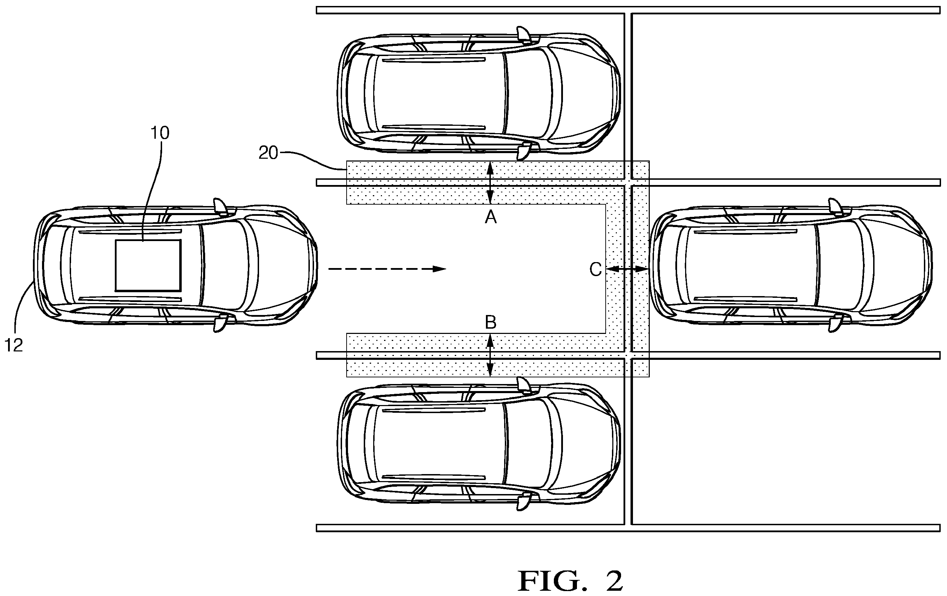

Fig. 2 illustrates the host vehicle 12 proximate an empty parking space that is surrounded by other parked vehicles. In this example, the host vehicle 12 is positioned to perform a nose-in parking maneuver into a longitudinal parking space. It will be appreciated that the device 10 also functions for backing maneuvers into the longitudinal parking space, and for parallel parking maneuvers that may include standard street parallel parking spaces and/or parallel parking spaces that require the host vehicle 12 to traverse a curb (e.g. sidewalk parking spaces). The parking spacing module 14 is further configured to determine a peripheral spacing parameter 20 for parking the host vehicle 12 based on the identified at least one user-specific parameter 18. The peripheral spacing parameter 20 includes spacing around at least one portion of a perimeter of the host vehicle 12 that improves an egress from, and/or an ingress to, the parked host vehicle 12. This is beneficial when a mobility and/or a maneuverability of a passenger of the host vehicle 12 may be compromised due to the at least one user-specific parameter 18 (e.g. the size and/or disability of the passenger).

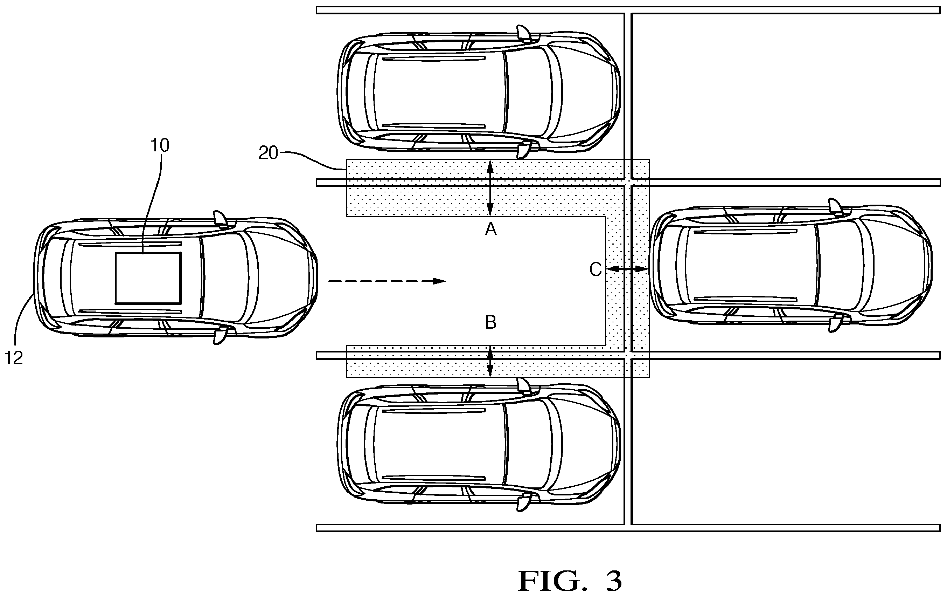

In the example illustrated in Fig. 2, the peripheral spacing parameter 20 is symmetric for the left, right, and front of the host vehicle 12. That is, the perimeter spacing around the host vehicle 12 is equal on each of the three sides bordered by the other parked vehicles. In another example the peripheral spacing parameter 20 is individually adjustable for each side of the host vehicle 12. That is, a unique spacing may be applied to a left side, and/or a right side, and/or a front side, and/or a rear side of the host vehicle 12. Fig. 3 illustrates an example of the peripheral spacing parameter 20 where the spacing on the left side of the host vehicle 12 is greater than the spacing on the right side of the host vehicle 12. In this example, the peripheral spacing parameter 20 is skewed such that a desired parked position of the host vehicle 12 in the parking space provides additional room on the left side of the host vehicle 12 for the passengers to exit and/or enter the vehicle. In this example, the parking spacing module 14 determined that the peripheral spacing parameter 20 should provide more clearance between the left side of the host vehicle 12 and the adjacent parked vehicle based on the identified at least one user-specific parameter 18. In another example, the parking spacing module 14 determines that more clearance is required on a particular side of the host vehicle 12 based on the identified at least one user-specific parameter 18 being the size of an infant car seat, or the size of an infant. In this example, more clearance is required on the side of the host vehicle 12 to allow a care giver to remove the infant in the car seat. In another example, the parking spacing module 14 identifies the driver of the vehicle is using a wheel chair and determines a peripheral spacing parameter 20 that includes additional room on the driver's side to allow the use of a lift to lower the driver from the cabin of the host vehicle 12.

Referring back to Fig. 1, the automated parking module 16 is configured to control the parking of the host vehicle 12 based on the determined peripheral spacing parameter 20, and steer the host vehicle 12 into the parking space. The automated parking module 16 determines an acceptable available parking space based on a comparison of the peripheral spacing parameter 20 to the available space dimensions, and rejects parking spaces that do not accommodate the determined peripheral spacing. In an example, the available parking space is 2.4m wide, and the overall width of the peripheral spacing parameter 20 is determined to be greater than 2.6m. In this example the automated parking module 16 excludes the 2.4m wide available parking space from consideration. In an example, the automated parking module 16 determines trajectories for the host vehicle 12 to enter the available parking space, and determines a final position of the host vehicle 12 in the parking space based on the determined peripheral spacing parameter 20. The automated parking module 16 actuates the vehicle controls (e.g., steering, accelerator, and brakes) of the host vehicle 12 by using feedback from the host vehicle sensors (e.g., radar, LiDAR, ultrasonic sensors) to apply the peripheral spacing parameter 20 during the parking maneuver. In an example, the automated parking module 16 adjusts proximity warnings based on the determined peripheral spacing parameter 20. That is, the proximity warning distance thresholds are adjusted to match the peripheral spacing parameter 20 for the respective side of the host vehicle 12, rather than maintaining factory-set thresholds that may not necessarily apply to the determined peripheral spacing. In an example, the proximity warnings may include audible, and/or visual, and/or haptic notifications from a respective alert device indicative of a distance between the host vehicle 12 and the surrounding parked vehicles.

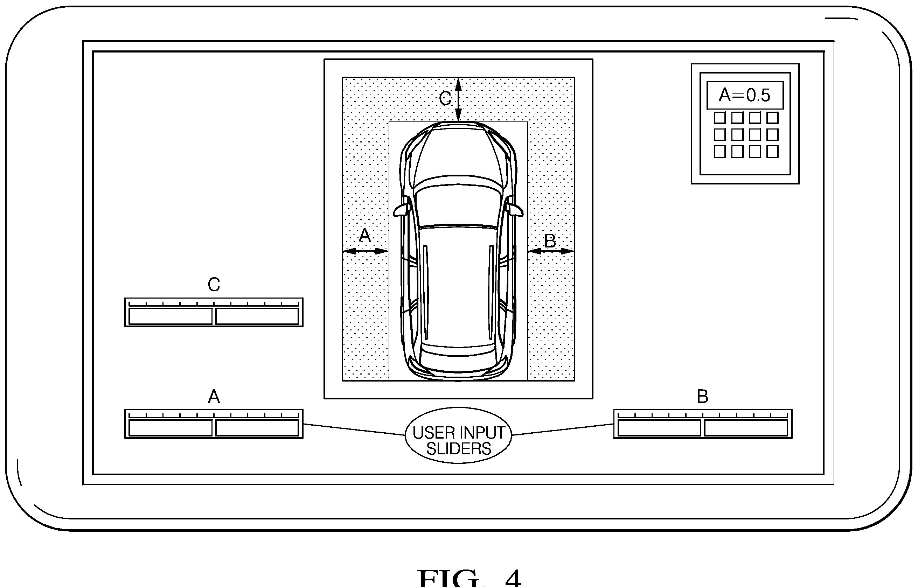

Fig. 4 illustrates an example where the device 10 further includes a graphical user interface (GUI) configured to accept an input from the one or more passengers of the host vehicle 12. The GUI may be included in a vehicle console display, and/or included in a vehicle instrument panel display, and/or included in a mobile device, such as a mobile phone or a tablet. In an example the device 10 identifies the at least one user-specific parameter 18 by receiving input from at least one user of the host vehicle 12 indicating a peripheral spacing preference. In the example illustrated in Fig. 4, the GUI includes a display indicating the preferred spacing around the perimeter of the host vehicle 12. In this example, the preferred spacing is adjustable by the user via one or more of slider bars, and/or numerical entries. In an example, the preferred spacing is individually adjustable for each side of the host vehicle 12.

In another example, the user inputs the at least one user-specific parameter 18 associated with one or more passengers of the vehicle into the parking spacing module 14 via the GUI. In another example, the at least one user-specific parameter 18 associated with one or more passengers of the vehicle is uploaded to the parking spacing module 14 from a personal device, such as a wearable health monitoring device and/or a mobile communication device, that contains the at least one user-specific parameter 18.

In an example, one or more user profiles indicative of the at least one user-specific parameter 18 are stored in the memory of the device 10. In an example, the device 10 identifies the user and retrieves the user's profile from the memory. In an example, the device 10 identifies the user based on a comparison of the determined user-specific parameters 18 and the user-specific parameters 18 that are stored in the memory. In another example, the device 10 identifies the user using facial recognition routines based on the images captured by the cameras. In another example, the device 10 identifies the user based on one of a stored seating position, and/or a steering wheel position, and/or a mirror position. In another example, the user inputs their identity into the device 10 via the GUI to recall the user profile. In an example, the user's profile includes at least one of the user's height and/or weight, and/or the respective preferred spacing around the perimeter of the host vehicle 12. In another example, the driver's user profile includes the preference for parking maneuvers (i.e., nose-in, rear-in, parallel parking, etc.).

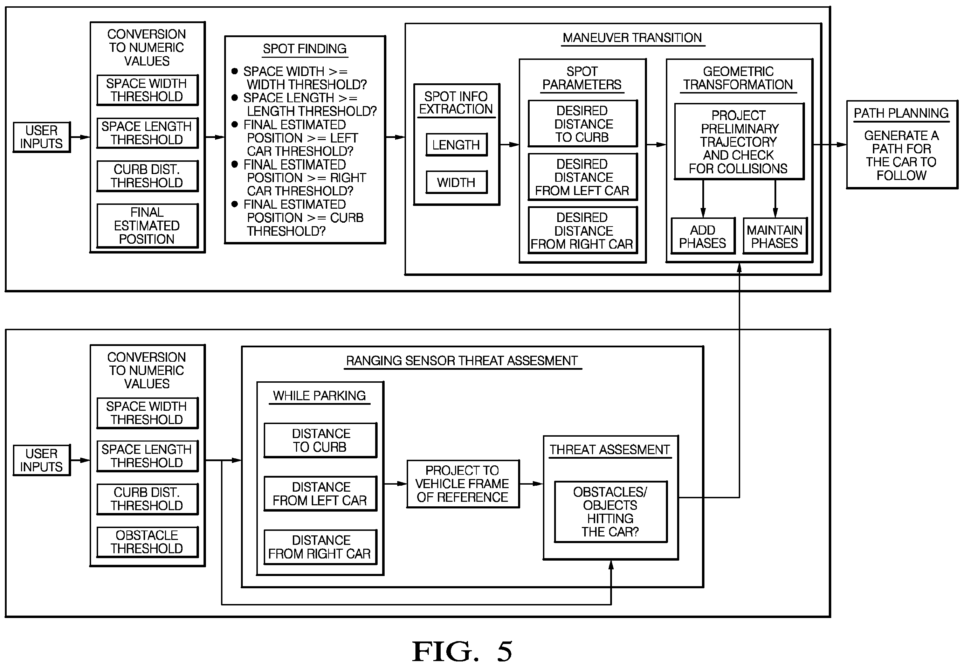

Fig. 5 illustrates an example of a logic flow for the device 10 of Fig. 1. In this example, the device 10 translates the user inputs to numeric values for comparison to available parking spaces, and determines a path or series of trajectories for the host vehicle 12 to follow for automated parking. A preliminary trajectory of the host vehicle 12 may be modified based on a threat assessment of objects detected by the host vehicle sensors, and additional phases (i.e., directional segments) may be added to the trajectory.

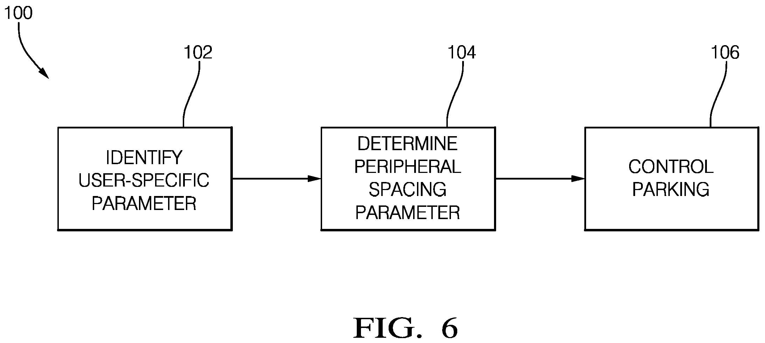

Fig. 6 is a flow chart of a method 100 of operating the device 10.

Step 102, IDENTIFY USER-SPECIFIC PARAMETER, includes identifying at least one user-specific parameter 18 associated with one or more passengers of a vehicle with a parking spacing module 14. Identifying the at least one user-specific parameter 18 includes using one or more sensor systems of the vehicle to automatically identify at least one size dimension associated with the one or more passengers of the vehicle, as described above. The one or more sensor systems may include a camera, a ranging sensor, a seat pressure sensor, a seat position sensor, and a radio frequency receiver. The user-specific parameter 18 may also include at least one disability associated with the one or more passengers of the vehicle, as described above. In an example, identifying the at least one user-specific parameter 18 comprises receiving input from at least one user indicating a spacing preference. The input may be received via the GUI configured to accept input from the one or more users of the vehicle, as described above. One or more user profiles indicative of the at least one user-specific parameter 18 may be stored in a memory of the device 10, as described above.

Step 104, DETERMINE PERIPHERAL SPACING PARAMETER, includes determining, with the parking spacing module 14, a peripheral spacing parameter 20 for parking the vehicle based on the identified at least one user-specific parameter 18, as described above. The peripheral spacing parameter 20 may be individually adjustable for each side of the vehicle, as described above.

Step 106, CONTROL PARKING, includes controlling the parking of the vehicle based on the determined peripheral spacing parameter 20 with an automated parking module 16, as described above. In an example, the automated parking module 16 adjusts proximity warnings based on the determined peripheral spacing parameter 20.

Accordingly, a device for automated vehicle parking 10, and a method 100 of operating the device 10 are provided. The device 10 may provide advantages over other automated parking devices because the device 10 enables an automated and customizable user spacing preference about the perimeter of the host vehicle 12.

While this invention has been described in terms of the preferred embodiments thereof, it is not intended to be so limited, but rather only to the extent set forth in the claims that follow. "One or more" includes a function being performed by one element, a function being performed by more than one element, e.g., in a distributed fashion, several functions being performed by one element, several functions being performed by several elements, or any combination of the above. It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact. The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

## Claims

1. A device (10), comprising:
a parking spacing module (14) configured to:
identify at least one user-specific parameter (18) associated with one or more passengers of a vehicle (12); and
determine a peripheral spacing parameter (20) for parking the vehicle (12) based on the identified at least one user-specific parameter (18); and
an automated parking module (16) configured to control parking of the vehicle (12) based on the determined peripheral spacing parameter (20).

2. The device (10) of claim 1, wherein identifying the at least one user-specific parameter (18) comprises utilizing one or more sensor systems of the vehicle (12) to automatically identify at least one size dimension associated with the one or more passengers of the vehicle (12).

3. The device (10) of claim 2, wherein the one or more sensor systems includes at least one of a camera, a ranging sensor, a seat pressure sensor, a seat position sensor, and a radio frequency receiver.

4. The device (10) of claim 2, wherein the at least one size dimension includes one or more of a height, a width, and a weight of the one or more passengers.

5. The device (10) of any one of the preceding claims, wherein identifying the at least one user-specific parameter (18) comprises utilizing one or more sensor systems of the vehicle (12) to automatically identify at least one disability associated with the one or more passengers of the vehicle (12).

6. The device (10) of claim 5, wherein the at least one disability includes one or more of a visual disability, and a locomotor disability.

7. The device (10) of any one of the preceding claims, wherein identifying the at least one user-specific parameter (18) comprises receiving input from at least one user indicating a spacing preference.

8. The device (10) of claim 7, wherein input is received via a graphical user interface (GUI) configured to accept input from the one or more passengers of the vehicle (12).

9. The device (10) of claim 8, wherein the GUI includes a display indicating a preferred spacing around a perimeter of the vehicle (12).

10. The device (10) of any one of the preceding claims, wherein one or more user profiles indicative of the at least one user-specific parameter (18) are stored in a memory of the device (10).

11. The device (10) of any one of the preceding claims, wherein the automated parking module (16) adjusts proximity warnings based on the determined peripheral spacing parameter (20).

12. The device (10) of any one of the preceding claims, wherein the peripheral spacing parameter (20) is individually adjustable for each side of the vehicle (12).

13. A method (100), comprising:
identifying (102) at least one user-specific parameter (18) associated with one or more passengers of a vehicle (12) with a parking spacing module (14);
determining (104), with the parking spacing module (14), a peripheral spacing parameter (20) for parking the vehicle (12) based on the identified at least one user-specific parameter (18); and
controlling (106) the parking of the vehicle (12) based on the determined peripheral spacing parameter (20) with an automated parking module (16).

14. The method (100) of claim 13, wherein identifying (102) the at least one user-specific parameter (18) comprises utilizing one or more sensor systems of the vehicle (12) to automatically identify at least one size dimension associated with the one or more passengers of the vehicle (12).

15. The method (100) of claim 13 or 14, wherein identifying (102) the at least one user-specific parameter (18) comprises receiving input from at least one user indicating a spacing preference, wherein input is received via a graphical user interface (GUI) configured to accept input from the one or more passengers of the vehicle (12).
